# EUROPÄISCHE PATENTSCHRIFT

(11) **EP 1 458 647 B1**
(45) Veröffentlichungstag und Bekanntmachung des Hinweises auf die Patenterteilung: **09.11.2005**
(21) Anmeldenummer: 02790473.9
(22) Anmeldetag: 06.12.2002
(51) Int. Cl.: C02F 1/42, C02F 9/00, B05B 15/12

(54) **VERFAHREN ZUR AUFBEREITUNG VON UMLAUFWASSER IN KOAGULIEREINRICHTUNGEN VON LACKIERANLAGEN**
METHOD FOR TREATING CIRCULATING WATER IN COAGULATION DEVICES OF PAINT INSTALLATIONS
PROCEDE DE TRAITEMENT D'EAU DE CIRCULATION DANS DES DISPOSITIFS DE COAGULATION D'INSTALLATIONS DE PEINTURE

(30) Priorität: 15.12.2001 DE 10161841
(43) Veröffentlichungstag der Anmeldung: 22.09.2004
(73) Patentinhaber: Henkel Kommanditgesellschaft auf Aktien, 40589 Düsseldorf (DE)
(72) Erfinder: RÜSSE, Steffen, 40789 Monheim (DE); SENNER, Marcus, 40625 Düsseldorf (DE)
(86) Internationale Anmeldenummer: PCT/EP2002/013837
(87) Internationale Veröffentlichungsnummer: WO 2003/051778

(56) Entgegenhaltungen:
- EP-A- 0 484 655
- EP-A- 0 536 648
- FR-A- 2 773 553
- PATENT ABSTRACTS OF JAPAN vol. 1996, no. 10, 31. Oktober 1996 (1996-10-31) & JP 08 141598 A (NIPPON PAINT PLANT ENG KK), 4. Juni 1996 (1996-06-04)

## Beschreibung

Die vorliegende Erfindung betrifft ein Verfahren zur Aufbereitung des Umlaufwassers aus Spritzkabinen mit Naßauswaschungen sowie ein Verfahren zur Kreislaufführung des Wassers aus Spritzkabinen mit Naßauswaschung.

In Lackieranlagen beispielsweise zur Lackierung von Automobilkarosserien werden Spritzkabinen mit Naßabscheidung des anfallenden Oversprays eingesetzt. Durch Versprühen von Wasser wird innerhalb der Spritzkabine ein feinverteilter Wassernebel erzeugt, der die Lackbestandteile des Oversprays aufnimmt und aus der Kabine austrägt. In den nachgeschalteten Wasserabscheidern wird dann das mit Lackbestandteilen beladene Wasser aufgefangen. Aufgrund der heute in Deutschland gültigen Abwassergesetzgebung muß das Spritzkabinenwasser als Umlaufwasser im Kreislauf geführt werden.

In einem gängigen Verfahren zur Kreislaufführung des Umlaufwassers aus Spritzkabinen mit Naßauswaschung wird das Wasser aus dem Abscheider einem Systemtank zugeführt. Dort findet eine Trennung, vorzugsweise durch Flotation der abgeschiedenen und koagulierten Lackbestandteilen statt, wodurch sich die Lackbestandteile im oberen Bereich des Tanks ansammeln. Alternativ kann diese Trennung auch durch Sedimentation, entweder direkt im Systemtank oder in einem Teilstrom, erfolgen. Im oben beschriebenen Verfahren ist das Wasser im unteren Bereich des Tanks im wesentlichen frei von festen Lackbestandteilen und wird im unteren Bereich aus dem Systemtank abgezogen, mit Koaguliermittel versetzt und wieder der Spritzkabine zugeführt. Im oberen Bereich des Systemtanks wird die mit den koagulierten Lackbestandteilen angereicherte Wasserfraktion abgezogen und einer Fest-Flüssig-Trenneinheit vorzugsweise einer Flotationseinheit zugeführt. Das hierbei anfallende im wesentlichen von den Lackbestandteilen befreite Wasser wird als Klarwasserphase in den Systemtank zurückgeführt. Auf diese Art und Weise kann zwar das Umlaufwasser im wesentlichen von koagulierbaren Lackbestandteilen befreit werden, aufgrund der Kreislaufführung entsteht aber eine stetige Aufkonzentrierung aller gelösten Inhaltsstoffe, wie z. B. Salze. Diese Aufkonzentrierung führt zu Korrosionsproblemen. Dies ist insbesondere darauf zurückzuführen, daß aufgrund des Unterdrucks in der Spritzkabine und der Feinverteilung des Wassernebels ein Teil des mit Salz beladenen Wassers in die Abluft gelangt, wobei das mitgerissene Salz zu Korrosionsproblemen in den Abluftsystemen führt. Dies bedeutet in der Praxis, daß in gewissen zeitlichen Abständen, in der Regel zweimal jährlich, das Umlaufwasser vollständig ausgetauscht werden muß. Die Einschränkung der Umlaufwasserstandzeiten ergibt sich aus den hohen Verdunstungsverlusten an Umlaufwasser, die dann durch Zugabe von reinem Wasser ausgeglichen werden müssen. Daher hat man auch versucht, die oben beschriebenen Probleme durch Verwendung immer hochwertiger Zusatzwasserqualitäten zu verringern. Diese hohen Zusatzwasserqualitäten erhöhen aber beträchtlich die Betriebskosten der Anlage. Außerdem konnten dadurch die Zeitintervalle bis zum Austausch des gesamten Spritzkabinenumlaufwassers nur geringfügig verlängert werden. Das eigentliche Problem der Aufkonzentrierung wird hierdurch aber nicht gelöst. Ein Austausch des Spritzkabinenumlaufwassers in regelmäßigen Abständen ist nach wie vor notwendig.

In der WO 99/38808 wird ein alternatives Verfahren zum Entfernen von Lack-Overspray aus dem Umlaufwasser beschrieben. Dabei wird dem Umlaufwasser Polyasparaginsäure als Dispergator für die Lackpartikel zugegeben. Hierbei koagulieren die Lackpartikel nicht, sondern sie werden als dispergierte Lackpartikel in Schwebe gehalten. Die dispergierten Lackpartikel werden aus dem Umlaufwasser durch eine Membranfiltration abgetrennt. Eine Aufsalzung des Umlaufwassers durch Koaguliermittel wird hierdurch vermieden. Aufgrund der Verdunstung reichern sich dennoch Salze im Umlaufwasser an, falls man nicht zu der unwirtschaftlich teuren Lösung greift, das Umlaufwasser ausschließlich mit vollentsalztem Wasser zu ergänzen. Also besteht auch bei einem solchen Verfahren die Aufgabe, gelöste Salze aus dem Umlaufwasser zu entfernen. Dabei darf insbesondere die Konzentration zweiwertiger Kationen wie Calcium und Magnesium eine Obergrenze nicht überschreiten, bei der die Dispergierung behindert wird. In diesem Falle stellt sich also insbesondere die Aufgabe, zweiwertige Kationen aus dem Umlaufwasser abzutrennen.

Es besteht daher ein Bedürfnis nach sowohl einem Verfahren zur Aufbereitung von Spritzkabinenumlaufwässern als auch zur Kreislaufführung der Spritzkabinenwässer, bei denen das Problem der Aufkonzentrierung unerwünschter Stoffe im Spritzkabinenumlaufwasser gelöst wird.

Aus EP-A-0 675 080 ist ein Verfahren zur Aufkonzentration des in Spritzkabinen mit Naßauswaschung anfallenden Oversprays durch eine mehrstufige Membranfiltration bekannt. Hierbei wird das aufzukonzentrierende Kabinenwasser/Overspraygemisch in einer Ultrafiltrationsstufe vorkonzentriert. Das Ultrafiltrationspermeat wird einer Umkehrosmosestufe zugeführt. Das Permeat der Umkehrosmose kann in den Kabinenwasserkreislauf zurückgeführt werden. Die EP-A-901 988 beschreibt ein Verfahren zur Aufbereitung des Umlaufwassers aus Spritzkabinen mit Naßauswaschung durch:
A) Zuführen zumindest eines Teils des Umlaufwassers zu einer Umkehrosmosestufe,
B) Auftrennen des Umlaufwassers in ein Retentat und ein Permeat in der Umkehrosmosestufe,
C) Auftrennen des Retentats aus der Umkehrosmose in einer Verdampfereinheit in einen Feststoffanteil und in einen flüchtigen Anteil,
D) Kondensieren des flüchtigen Anteils aus Stufe c)
E) Verwerten des Permeats aus Stufe B) des Feststoffanteils aus Stufe C) und des Kondensats aus Stufe D).

In einer bevorzugten Ausführungsform werden das Permeat in der Umkehrosmose und das Kondensat aus der Verdampferstufe zusammengeführt und gemeinsam verwertet, vorzugsweise in den Umlaufinrasserkreislauf zurückgeführt.

Verfahren zur Aufbereitung von Umlaufwasser durch Membranfiltration unter hohem Druck haben jedoch in der Praxis einige Nachteile. Für die Einrichtung zur Druckerzeugung und für die Membranmodule fallen hohe Investitions- und Betriebskosten an. Weiterhin bringen die unter Hochdruck stehenden Membranmodule ein Gefährdungsrisiko mit sich. Daher ist das Problem der Aufbereitung von Umlaufwasser zur Verringerung der Salzbelastung im zurückgeführten Umlaufwasser noch nicht befriedigend gelöst. Die vorliegende Erfindung schlägt ein Verfahren vor, das die Nachteile einer Membranfiltration nicht aufweist.

Die Erfindung betrifft ein Verfahren zur Aufbereitung von Umlaufwasser in Lackieranlagen, in denen entweder durch Zugabe von Koaguliermitteln ein Lackkoagulat oder durch Zugabe von Dispergiermitteln dispergierte Lackpartikel erzeugt werden, wobei das Umlaufwasser Kationen und Anionen enthält und wobei man kontinuierlich oder diskontinuierlich
a) zumindest einen Teil des Umlaufwassers von zumindest einem Teil des Lackkoagulats oder der dispergierten Lackpartikel unter Bildung einer Klarwasserphase befreit,
b) zumindest einen Teil der im Teilschritt a) erhaltenen Klarwasserphase über einen Ionenaustauscher gibt und die den lonenaustauscher verlassende Klarwasserphase in das Umlaufwasser zurückführt, wobei der lonenaustauscher mit Anionen und/oder Kationen der Klarwasserphase beladen wird,
c) den im Teilschritt b) mit Anionen und/oder Kationen beladenen lonenaustauscher regeneriert, wobei ein Regenerat erhalten wird,
d) das im Teilschritt c) erhaltene Regenerat eindampft oder entsorgt,
e) den im Teilschritt c) regenerierten lonenaustauscher erneut für den Teilschritt b) einsetzt.

Wie einleitend erwähnt, wird der Teilschritt a) in Lackieranlagen üblicherweise stets durchgeführt, um das Umlaufwasser von Lackpartikeln weitgehend zu befreien und die Klarwasserphase erneut zur Absorption des Lack-Oversprays einzusetzen. Hierfür sind Sedimentation oder Flotation der koagulierten Lackpartikel die gängisten Verfahren. Alternativ kämen der Einsatz einer Ultrafiltrationsanlage oder von Separatoren wie beispielsweise Dekanter in Betracht. Diese sind jedoch apparativ aufwendiger und daher weniger bevorzugt.

Eine Alternative ist jedoch das einleitend geschilderte Verfahren der WO 99/38808, in dem die Lackpartikel durch Zusatz von Dispergatoren in der Schwebe gehalten und durch eine Membranfiltration vom Umlaufwasser abgetrennt werden.

Es ist überraschend, daß ein lonenaustauscher überhaupt für die vorliegende Aufgabenstellung eingesetzt werden kann. Man würde erwarten, daß der lonenaustauscher durch in der Klarwasserphase immer noch vorhandene Lackteilchen und insbesondere durch zur Koagulierung angesetzte organische Polymere schnell unbrauchbar werden würde. Praxisversuche zeigten jedoch, daß dies nicht der Fall ist. Hilfsreich ist es hierfür, zwischen den Teilschritten a) und b) die zu behandelnde Klarwasserphase durch Dekantieren, Filtrieren oder Zentrifugieren weiter von Feststoffen zu befreien. Insbesondere empfiehlt es sich, aus Sicherheitsgründen vor dem Teilschritt b) eine Filtration beispielsweise über einen Beutelfilter oder einen Sandfilter vorzusehen. Besonders vorteilhaft kann ein rückspülfähiger Sandfilter eingesetzt werden. Die Betriebssicherheit der lonenaustauscheranlage wird hierdurch erhöht.

In einer Ausführungsform der Erfindung führt man den Regenerierungsschritt c) durch, nachdem im Teilschritt b) eine vorzugebende Menge an Klarwasserphase über den Austauscher gegeben wurde. Man ermittelt also einen Erfahrungswert für das Gesamtvolumen an Klarwasserphase, die über den lonenaustauscher geleitet werden kann, bevor dieser erschöpft ist. Nach Überleiten dieser empirisch ermittelnden Menge führt man dann jeweils den Regenerierungsschritt durch. Dies erspart es, im laufenden Betrieb die Beladung des Austauschers analytisch zu verfolgen. Diese Verfahrensweise hat jedoch den Nachteil, daß je nach Salzkonzentration in der Klarwasserphase entweder die Kapazität des lonenaustauschers nicht ausgeschöpft wird oder daß es wegen Überladung zu einem Durchbruch der zu entfernenden Ionen kommen kann. Daher ist es empfehlenswerter, den Beladungszustand durch analytische Kontrolle der aus dem lonenaustauscher ablaufenden Klarwasserphase zu überprüfen. Die Alternativen hierfür werden weiter unten näher ausgeführt.

In einer speziellen Ausführungsform des erfindungsgemäßen Verfahrens wird in dem Umlaufwasser der Lackieranlage durch Zugabe von Koaguliermitteln ein Lackkoagulat erzeugt. Hierfür sind insbesondere Koaguliermittel auf Basis kationischer Polymere mit anorganischen Anionen als Gegenionen geeignet. Beispiele hierfür sind Salze von Polyaminen oder Polyamidoaminen. Hierdurch gelangen anorganische Anionen in das Umlaufwasser, die zu einer Aufsalzung führen. In diesem Fall setzt man im erfindungsgemäßen Verfahren einen Anionenaustauscher ein, der im Teilschritt b) mit Anionen der Klarwasserphase beladen und im Teilschritt c) mit einer starken Lauge regeneriert wird.

In dieser Ausführungsform wird im Teilschritt b) zumindest ein Teil der im Teilschritt a) erhaltenen Klarwasserphase über einen Anionenaustauscher gegeben. Hierbei kann es sich um einen stark basischen oder um einen schwach basischen Anionenaustauscher handeln, der in regeneriertem Zustand in der OH-Form vorliegt. Anionen im Umlaufwasser, insbesondere Chloridionen, aber auch Nitrat- oder Sulfationen und weitere gegebenenfalls vorliegende Anionen werden gegen OH-Ionen ausgetauscht. Aufgrund ihrer Korrosionsneigung sollen insbesondere Chloridionen und/oder Sulfationen aus dem Umlaufwasser entfernt werden. Bei Sulfationen besteht eine Gefahr einer Geruchsbelästigung durch mikrobiell gebildetes H₂S. Carbonat- und/oder Hydrogencarbonationen im Umlaufwasser stören jedoch nicht, da sie weniger zu Korrosionserscheinungen führen. Es ist daher nicht erforderlich, auch diese lonen aus dem Umlaufwasser zu entfernen. Daher geht man in einer bevorzugten Ausführungsform so vor, daß man den Anionenaustuascher im Teilschritt b) so lange mit Anionen der Klarwasserphase belegt, daß anfänglich an den Anionenaustauscher gebundene Carbonat- und/oder Hydrogencarbonationen durch in der Klarwasserphase befindliche Anionen stärkerer Säure als Kohlensäure verdrängt werden. Dies sind insbesondere die Chlorid- und/oder Sulfationen, gegebenenfalls auch Nitrationen. Man nützt also die Kapazität des Anionenaustauschers voll aus, um insbesondere die unerwünschten Anionen Chlorid- und/oder Sulfationen zu binden, während die weniger schädlichen Carbonat- und/oder Hydrogencarbonationen wieder aus dem Austauscher freigesetzt werden. Diese Maßnahme verlängert die Standzeit des Anionenaustauschers zwischen zwei Regenerierungszyklen und verringert im Endeffekt die für die Regenerierung erforderliche Menge an Lauge.

Zweiwertige Kationen wie Calcium- und Magnesium-Ionen werden aus dem Umlaufwasser jedoch nicht entfernt. Dies ist erwünscht, da diese Kationen die Wirkung vieler Koaguliermittel günstig beeinflussen. Daher werden Magnesium- oder Calciumverbindungen bei vielen Koagulierverfahren dem Umlaufwasser bewußt zugesetzt. Durch das erfindungsgemäße Anionenaustauschverfahren werden zwar die störenden und/oder korrosiv wirkenden Anionen wie insbesondere Chlorid lonen entfernt, die erwünschten Magnesium- oder Calcium-Ionen jedoch im Umlaufwasser belassen. Hierdurch können im Umlaufwasser Calcium- und/oder Magnesiumionen in Konzentrationen von jeweils etwa 10 bis etwa 1 000, insbesondere von etwa 20 bis etwa 500 mg/l vorliegen. Sollten sich beim Überleiten eines derartigen Umlaufwassers über den Anionenaustauscher durch Austausch der Anionen gegen OH⁻-Ionen Hydroxidniederschläge der genannten Kationen bilden, kann erforderlichenfalls der Anionenaustauscher durch Spülen mit einer starken Säure wie beispielsweise Salzsäure gereinigt werden.

Durch den Austausch der Anionen des Umlaufwassers gegen OH⁻-Ionen erhöht sich der pH-Wert des Umlaufwassers. Dies ist ein erwünschter Nebeneffekt des erfindungsgemäßen Verfahrens, da im Umlaufwasser von Lackieranlagen der pH-Wert mit der Zeit häufig abfällt. Dies kann auf die Aktivität von Bakterien und anderen Mikroorganismen im Umlaufwasser zurückgeführt werden. Ein solcher Abfall des pH-Werts ist jedoch unerwünscht. In der Praxis wird dadurch entgegengewirkt, daß man den pH-Wert durch Zugabe von Lauge wieder anhebt. Im Zuge des erfindungsgemäßen Verfahrens kann hierfür die den Anionenaustauscher verlassende alkalische Klarwasserphase direkt eingesetzt werden. Die für die Regenerierung des Anionenaustauschers eingesetzte Lauge wird hierdurch letztlich einem zweiten Verwendungszweck zugeführt.

Wenn der Anionenaustauscher mit Anionen aus dem Umlaufwasser beladen ist, wird er im Teilschritt c) mit einer starken Lauge, beispielsweise mit Natronlauge, regeneriert. Als Regenerat wird eine Salzlösung erhalten, welche die im Teilschritt b) an den Austauscher gebundenen Anionen enthält. Insbesondere wird eine Lösung von Natriumchlorid als Regenerat erhalten. Dieses Regenerat wird im Teilschritt d) entweder eingedampft, so daß kein Abwasser anfällt, das Kondensat des Eindampfens wieder in das Umlaufwasser zurückgeführt werden kann und die erhaltenen festen Salze entsorgt werden. Oder aber das Regenerat wird direkt entsorgt, z. B. zusammen mit dem Lackkoagulat.

Mit dem erfindungsgemäßen Verfahren lassen sich also beispielsweise Sulfationen aus dem Umlaufwasser entfernen. Hierdurch verringert sich zum einen die korrosive Wirkung des Umlaufwassers. Weiterhin wird hierdurch eine unerwünschte bakterielle Bildung von Schwefelwasserstoff und das hiermit verbundene Geruchsproblem verringert. Weiterhin ist vorteilhaft, daß ChloridIonen mit ihrer insbesondere für Edelstahl korrosiven Wirkung aus dem Umlaufwasser entfernt werden. Hierdurch wird es möglich, als Koaguliermittel die Chloride von kationischen organischen Polymeren, insbesondere von stickstoffhaltigen Polymeren einzusetzen. Beispiele hierfür sind die Chloride von Polyaminen und Polyamidoaminen. Diese sind in der Regel leichter verfügbar und preiswerter als Salze organischer Kationen mit anderen Anionen. Die Nachteile, die mit dem Eintrag von Chloridionen in das Umlaufwasser üblicherweise verbunden sind, werden aufgrund des erfindungsgemäßen Verfahrens verringert oder beseitigt. Hierdurch erweitert sich die Auswahl preiswerter Koaguliermittel auf Basis organischer Kationen, die für die Lackkoagulierung eingesetzt werden können. Beispielsweise kann das erfindungsgemäße Verfahren bei einem Umlaufwasser eingesetzt werden, das einen Gehalt an Chloridionen von oberhalb 300 mg/l, insbesondere von oberhalb 700 mg/l aufweist.

Führt man das erfindungsgemäße Verfahren in der vorstehend beschriebenen Weise durch, daß man Anionen des Umlaufwassers gegen OH⁻-Ionen austauscht, läßt sich die Erschöpfung des Anionenaustauschers besonders einfach kontrollieren. Durch den Anionenaustausch erhöht sich der pH-Wert des Umlaufwassers bzw. der Klarwasserphase, die den Anionenaustauscher verläßt. Daher kann die Erschöpfung des Anionenaustauschers dadurch kontrolliert werden, daß man im Teilschritt b) den pH-Wert der den Anionenaustauscher verlassenden Klarwasserphase mißt. Man beendet den Anionenaustausch und führt den Regenerierungsschritt c) durch, wenn der pH-Wert einen vorzugebenden Wert unterschreitet. Dabei kann die Grenze des pH-Werts, bei der man den Regenerierungsschritt c) startet, absolut oder relativ angesetzt werden. Beispielsweise kann die Regenerierung dann eingeleitet werden, wenn der pH-Wert der den Anionenaustauscher verlassenden Klarwasserphase einen Wert von 8,5 oder von 8 unterschreitet. Alternativ kann man vorgeben, daß die Regenerierung dann eingeleitet wird, wenn die Differenz zwischen den pH-Werten der auf den Anionenaustauscher aufgegebenen und der ihn verlassenden Klarwasserphase einen vorzugebenden Wert, beispielsweise eine pH-Werteinheit unterschreitet. Alternativ hierzu kann man im Teilschritt b) direkt den Gehalt an Chlorid- und/oder Sulfationen in der den Anionenaustauscher verlassenden Klarwasserphase messen und den Regenerierungsschritt c) durchführen, wenn der Gehalt an Chlorid- und/oder Sulfationen einen vorzugebenden Wert überschreitet. Hierfür stehen geeignete Bestimmungsverfahren, die auch on-line durchgeführt werden können, zur Verfügung. Beispielsweise genannt seien lonenchromatographie, Fällungstitrationsmethoden, die beispielsweise elektrochemisch verfolgt werden können, oder eine Konzentrationsbestimmung mit Hilfe ionenselektiver Elektroden.

Eine weitere vorteilhafte Ausführungsform der vorliegenden Erfindung besteht darin, daß in dem Umlaufwasser der Lackieranlage durch Zugabe von Dispergiermitteln dispergierte Lackpartikel erzeugt werden, die durch Membranfiltration vom Umlaufwasser abgetrennt werden, und daß es sich bei dem lonenaustauscher um einen Kationenaustauscher handelt, der im Teilschritt b) mit zweiwertigen Kationen der Klarwasserphase beladen und im Teilschritt c) mit einer starken Säure regeneriert wird. Beispielsweise kann das erfindungsgemäße Verfahren in Verbindung mit dem eingangs zitierten Dispergierverfahren der WO 99/38808 durchgeführt werden, bei dem man durch Zugabe von Polyasparaginsäure die Lackpartikel in Dispersion hält. Dieses Verfahren kann durch zu hohe Gehalte an zweiwertigen Kationen, insbesondere an Calcium- und/oder Magnesiumionen im Umlaufwasser gestört werden. In diesem Fall wird also im Zuge des erfindungsgemäßen Verfahrens ein Kationenaustauscher eingesetzt, um die störenden Kationen aus dem Umlaufwasser zu entfernen. Der Kationenaustauscher wird nach Beladung mit einer starken Säure regeneriert. Ob die Beladungsgrenze des Kationenaustauschers beim Überleiten der Klarwasserphase erreicht ist, läßt sich auf ähnliche Weise überprüfen, wie es vorstehend im Falle der Anionenaustauscher beschrieben wurde. Als Kriterium für die Erschöpfung des Kationenaustauschers kann der pH-Wert der Klarwasserphase nach Verlassen des Kationenaustauschers herangezogen werden. Tauscht man die Kationen gegen H⁺-Ionen aus, führt dies zu einer Erniedrigung des pH-Werts. Bleibt dieser aus, ist der Kationenaustauscher erschöpft. Alternativ hierzu kann der Gehalt an zweiwertigen Kationen in der Klarwasserphase nach Verlassen des Kationenaustauschers analytisch bestimmt werden. Überschreitet die Konzentration einen vorzugebenden Mindestwert, ist der Kationenaustauscher erschöpft und muß regeneriert werden. Diese Überwachungsmethode bietet sich insbesondere an, wenn die zweiwertigen Kationen nicht gegen H⁺-Ionen, sondern beispielsweise gegen Na⁺-Ionen ausgetauscht werden.

Unabhängig davon, welche Ausführungsform des erfindungsgemäßen Verfahrens man wählt, d. h. ob man Anionen oder Kationen durch einen jeweils geeigneten lonenaustauscher aus dem Umlaufwasser entfernen will, wird der regenerierte lonenaustauscher im Teilschritt e) erneut für den Teilschritt b) eingesetzt. Dabei kann der lonenaustauscher während aller Prozeßschritte am Ort der Lackieranlage verbleiben, deren Umlaufwasser aufgearbeitet werden soll. Eine wirtschaftlich attraktive Alternative hierzu besteht jedoch darin, daß man das erfindungsgemäße Verfahren diskontinuierlich durchführt und hierfür eine mobile Anionenaustauscheranlage an den Ort der Lackieranlage bringt. Dies heißt, daß nicht ständig ein lonenaustauscher an der Lackieranlage vorrätig gehalten bzw. mit der Klarwasserphase des Umlaufwassers beladen wird. Stattdessen verzichtet man auf den lonenaustausch so lange, bis die unerwünschten Anionen oder Kationen eine festzulegende Konzentrationsgrenze erreicht haben. Erst dann bringt man einen geeigneten lonenaustauscher an den Ort der Lackieranlage und führt die erfindungsgemäße Verfahrensfolge durch. Der beladene lonenaustauscher kann dann am Ort der Lackieranlage oder an einem anderen Ort regeneriert werden. Auf diese Weise kann die selbe lonenaustauschersäule an verschiedenen Lackieranlagen verwendet werden. Für jede einzelne Lackieranlage verringert dies die Investitionskosten.

Unabhängig von der gewählten Verfahrensweise führt man die Regenerierung des lonenaustauschers vorzugsweise auf fraktionierte Weise durch. Beispielsweise wird im Falle eines Anionenaustauschers chargenweise mit Natronlauge regeneriert. Die erste Charge des Regenerats enthält dann eine möglichst hohe Salzkonzentration und ist daher besonders wirtschaftlich aufzuarbeiten (beispielsweise durch Eindampfen) oder zu entsorgen. Die weiteren ein oder zwei Chargen an Natronlauge dienen zur Einstellung des Austauscherharzes. Analog verfährt man vorteilhaft bei der Regenerierung eines Kationenaustauschers mit einer starken Säure oder einer konzentrierten Natriumsalzlösung.

## Patentansprüche

1. Verfahren zur Aufbereitung von Umlaufwasser in Lackieranlagen, in denen entweder durch Zugabe von Koaguliermitteln ein Lackkoagulat oder durch Zugabe von Dispergiermitteln dispergierte Lackpartikel erzeugt werden, wobei das Umlaufwasser Kationen und Anionen enthält und wobei man kontinuierlich oder diskontinuierlich
a) zumindest einen Teil des Umlaufwassers von zumindest einem Teil des Lackkoagulats oder der dispergierten Lackpartikel unter Bildung einer Klarwasserphase befreit,
b) zumindest einen Teil der im Teilschritt a) erhaltenen Klarwasserphase über einen lonenaustauscher gibt und die den lonenaustauscher verlassende Klarwasserphase in das Umlaufwasser zurückführt, wobei der lonenaustauscher mit Anionen und/oder Kationen der Klarwasserphase beladen wird,
c) den im Teilschritt b) mit Anionen und/oder Kationen beladenen lonenaustauscher regeneriert, wobei ein Regenerat erhalten wird,
d) das im Teilschritt c) erhaltene Regenerat eindampft oder entsorgt,
e) den im Teilschritt c) regenerierten lonenaustauscher erneut für den Teilschritt b) einsetzt.

2. Verfahren nach Anspruch 1, **dadurch gekennzeichnet, daß** zwischen den Teilschritten a) und b) die im Teilschritt b) zu behandelnde Klarwasserphase durch Dekantieren, Filtrieren oder Zentrifugieren weiter von Feststoffen befreit wird.

3. Verfahren nach einem oder beiden der Ansprüche 1 und 2, **dadurch gekennzeichnet, daß** man den Regenerierungsschritt c) durchführt, nachdem im Teilschritt b) eine vorzugebende Menge an Klarwasserphase über den Austauscher gegeben wurde.

4. Verfahren nach einem oder mehreren der Ansprüche 1 bis 3, **dadurch gekennzeichnet, daß** in dem Umlaufwasser der Lackieranlage durch Zugabe von Koaguliermitteln ein Lackkoagulat erzeugt wird und daß es sich bei dem lonenaustauscher um einen Anionenaustauscher handelt, der im Teilschritt b) mit Anionen der Klarwasserphase beladen und im Teilschritt c) mit einer starken Lauge regeneriert wird.

5. Verfahren nach Anspruch 4, **dadurch gekennzeichnet, daß** man den Anionenaustauscher im Teilschritt b) solange mit Anionen der Klarwasserphase belegt, daß anfänglich an den Anionenaustauscher gebundene Carbonat- und/oder Hydrogencarbonationen durch in der Klarwasserphase befindliche Anionen stärkerer Säuren als Kohlensäure verdrängt werden.

6. Verfahren nach einem oder beiden der Ansprüche 4 und 5, **dadurch gekennzeichnet, daß** das Umlaufwasser einen Gehalt an Chloridionen von oberhalb 300 mg/l, insbesondere von oberhalb 700 mg/l aufweist.

7. Verfahren nach einem oder mehreren der Ansprüche 4 bis 6, **dadurch gekennzeichnet, daß** man im Teilschritt b) den pH-Wert der den Anionenaustauscher verlassenden Klarwasserphase mißt und den Regenerierungsschritt c) durchführt, wenn der pH-Wert einen vorzugebenden Wert unterschreitet.

8. Verfahren nach einem oder mehreren der Ansprüche 4 bis 6, **dadurch gekennzeichnet, daß** man im Teilschritt b) den Gehalt an Chlorid- und/oder Sulfationen in der den Anionenaustauscher verlassenden Klarwasserphase mißt und den Regenerierungsschritt c) durchführt, wenn der Gehalt an Chlorid- und/oder Sulfationen einen vorzugebenden Wert überschreitet.

9. Verfahren nach einem oder mehreren der Ansprüche 1 bis 3, **dadurch gekennzeichnet, daß** in dem Umlaufwasser der Lackieranlage durch Zugabe von Dispergiermitteln dispergierte Lackpartikel erzeugt werden, die durch Membranfiltration vom Umlaufwasser abgetrennt werden, und daß es sich bei dem Ionenaustauscher um einen Kationenaustauscher handelt, der im Teilschritt
b) mit zweiwertigen Kationen der Klarwasserphase beladen und im Teilschritt
c) mit einer starken Säure regeneriert wird.

10. Verfahren nach einem oder mehreren der Ansprüche 1 bis 9, **dadurch gekennzeichnet, daß** man das Verfahren diskontinuierlich durchführt und hierfür eine mobile Anionenaustauscheranlage an den Ort der Lackieranlage bringt.

## Claims

1. A process for conditioning circuit water in paint shops in which a paint coagulate is produced by addition of coagulants or dispersed paint particles are produced by addition of dispersants, the circuit water containing cations and anions and - continuously or discontinuously -
a) at least part of the circuit water being freed from at least part of the paint coagulate or the dispersed paint particles to form a clear water phase,
b) at least part of the clear water phase obtained in step a) being passed through an ion exchanger and the clear water phase leaving the ion exchanger being returned to the circuit water, the ion exchanger being charged with anions and/or cations of the clear water phase,
c) the ion exchanger charged with anions and/or cations in step b) being regenerated, a regenerate being obtained,
d) the regenerate obtained in step c) being concentrated by evaporation or disposed of,
e) the ion exchanger regenerated in step c) being re-used for step b).

2. A process as claimed in claim 1, **characterized in that**, between steps a) and b), the clear water phase to be treated in step b) is further freed from solids by decantation, filtration or centrifuging.

3. A process as claimed in one or both of claims 1 and 2, **characterized in that** the regenerating step c) is carried out after a predetermined quantity of clear water phase has been passed through the exchanger in step b).

4. A process as claimed in one or more of claims 1 to 3, **characterized in that** a paint coagulate is produced in the circuit water of the paint shop by addition of coagulants and **in that** the ion exchanger is an anion exchanger which is charged with anions of the clear water phase in step b) and regenerated with a strong lye in step c).

5. A process as claimed in claim 4, **characterized in that**, in step b), the anion exchanger is charged with anions of the clear water phase until carbonate and/or hydrogen carbonate ions initially bound to the anion exchanger are displaced by anions of stronger acids than carbonic acid present in the clear water phase.

6. A process as claimed in one or both of claims 4 and 5, **characterized in that** the circuit water has a content of chloride ions above 300 mg/l and more particularly above 700 mg/l.

7. A process as claimed in one or more of claims 4 to 6, **characterized in that**, in step b), the pH of the clear water phase leaving the anion exchanger is measured and the regenerating step c) is carried out if the pH falls below a value to predetermined.

8. A process as claimed in one or more of claims 4 to 6, **characterized in that**, in step b), the content of chloride and/or sulfate ions in the clear water phase leaving the anion exchanger is measured and the regenerating step c) is carried out if the content of chloride and/or sulfate ions exceeds a value to be predetermined.

9. A process as claimed in one or more of claims 1 to 3, **characterized in that** dispersed paint particles are produced in the circuit water of the paint shop by addition of dispersants and are removed from the circuit water by membrane filtration and **in that** the ion exchanger is a cation exchanger which is charged with divalent cations of the clear water phase in step b) and regenerated with a strong acid in step c).

10. A process as claimed in one or more of claims 1 to 9, **characterized in that** the process is carried out discontinuously, for which purpose a mobile anion exchanger unit is brought to the paint shop.

## Revendications

1. Procédé de traitement d'eau de circulation dans des installations de peinture, dans lesquels on obtient soit un produit de coagulation de peinture par addition de produits de coagulation, soit des particules de peinture dispersées par addition de produits dispersants, dans lequel l'eau de circulation contient des cations et des anions, et dans lequel, de façon continue ou discontinue
a) on débarrasse au moins une partie de l'eau de circulation d'au moins une partie du produit de coagulation de peinture ou des particules de peinture dispersées avec formation d'une phase aqueuse claire,
b) on introduit au moins une partie de la phase aqueuse claire contenue dans l'étape partielle a) dans un échangeurs d'ions et on réintroduit la phase aqueuse claire qui quitte l'échangeur d'ions dans l'eau de circulation, l'échangeur d'ions étant chargé avec des anions et/ou des cations de la phase aqueuse claire,
c) on régénère l'échangeur d'ions chargé dans l'étape partielle b) avec des anions et/ou des cations, opération dans laquelle on obtient un produit de régénération,
d) on fait évaporer ou on élimine le produit de régénération obtenu dans l'étape partielle c),
e) on réutilise l'échangeur d'ions régénéré dans l'étape partielle c) pour l'étape partielle b).

2. Procédé selon la revendication 1, **caractérisé en ce qu'**entre les étapes partielles a) et b) on débarrasse encore de ses solides, par décantation, filtration ou centrifugation, la phase aqueuse claire à traiter dans l'étape b).

3. Procédé selon l'une des revendications 1 ou 2, ou les deux, **caractérisé en ce qu'**on conduit l'étape de régénération c) après avoir introduit à travers l'échangeur, dans l'étape partielle b), une quantité de phase aqueuse claire à déterminer à l'avance.

4. Procédé selon une ou plusieurs des revendications 1 à 3, **caractérisé en ce qu'**on produit, dans l'eau de circulation de l'installation de peinture, par addition d'agents de coagulation, un produit de coagulation de peinture, et **en ce que**, pour ce qui est de l'échangeur d'ions, il s'agit d'un échangeur d'anions qui dans l'étape partielle b) est chargé avec des anions de la phase aqueuse claire, et dans l'étape partielle c) est régénéré avec une solution alcaline.

5. Procédé selon la revendication 4, **caractérisé en ce qu'**on charge l'échangeur d'anions dans l'étape partielle b) avec des anions de la phase aqueuse claire jusqu'à ce que les ions carbonate et/ou hydrogénocarbonates fixés au début sur l'échangeur d'anions soient déplacés par des anions d'acides plus forts que l'acide carbonique qui se trouvent dans la phase aqueuse claire.

6. Procédé selon l'une des revendications 4 ou 5, ou les deux, **caractérisé en ce que** l'eau de circulation présente une teneur en ions chlorure supérieure à 300 mg/l, en particulier supérieure à 700 mg/l.

7. Procédé selon une ou plusieurs des revendications 4 à 6, **caractérisé en ce que** dans l'étape partielle b) on mesure le pH de la phase aqueuse claire qui quitte l'échangeur d'anions et l'on exécute l'étape de régénération c) lorsque le pH descend en-dessous d'une valeur prédéterminée.

8. Procédé selon une ou plusieurs des revendications 4 à 6, **caractérisé en ce que** dans l'étape partielle b) on mesure la teneur en ions chlorure et/ou sulfate dans la phase aqueuse claire qui quitte l'échangeur d'anions et l'on exécute l'étape de régénération c) lorsque la teneur en ions chlorure et/ou sulfate dépasse une valeur prédéterminée.

9. Procédé selon une ou plusieurs des revendications 1 à 3, **caractérisé en ce que**, dans l'eau de circulation de l'installation de peinture, on produit, en ajoutant des dispersants, des particules de peinture dispersées que l'on sépare de l'eau de circulation au moyen d'une filtration à membrane, et **en ce que**, pour ce qui est de l'échangeur d'ions, il s'agit d'un échangeur de cations que dans l'étape partielle
b) on charge avec des cations bivalents de la phase aqueuse claire et dans l'étape partielle
c) on régénère avec un acide fort.

10. Procédé selon une ou plusieurs des revendications 1 à 9, **caractérisé en ce qu'**on réalise le procédé de façon discontinue et **en ce qu'**à cet effet on apporte une installation mobile d'échange d'anions à l'endroit de l'installation de peinture.
